# EUROPEAN PATENT APPLICATION

(11) **EP 2 824 633 A1**
(43) Date of publication of application: **14.01.2015**
(21) Application number: 12867153.4
(22) Date of filing: 05.09.2012
(51) Int. Cl.: G06T 1/00

(54) **IMAGE PROCESSING METHOD AND TERMINAL DEVICE**

(30) Priority: 31.01.2012 CN 201210021854
(71) Applicant: Huawei Device Co., Ltd., Longgang District Shenzhen Guangdong 518129 (CN)
(72) Inventor: TANG, Fangyi, Shenzhen Guangdong 518129 (CN)
(74) Representative: Thun, Clemens
(86) International application number: PCT/CN2012/080999
(87) International publication number: WO 2013/113219

(57) **Abstract**

The present invention relates to image processing technologies, and in particular, to an image processing method and a terminal device. The method includes: displaying an image that is in a terminal in a display area on a screen of the terminal, and presenting description information of the image outside the display area of the image after an instruction for viewing the description information of the image is received, so as to avoid a problem in the prior art that some pixels of an image are shielded because a terminal device adds annotation information to the image, thereby effectively increasing a visual effect of the image.

## Description

This application claims priority to Chinese Patent Application No. 201210021854.9, filed with the Chinese Patent Office on January 31, 2012 and entitled "IMAGE PROCESSING METHOD AND TERMINAL DEVICE", which is incorporated herein by reference in its entirety.

### TECHNICAL FIELD

The present invention relates to image processing technologies, and in particular, to an image processing method and a terminal device.

### BACKGROUND

With an increase in a storage capacity of a terminal device, the terminal device can store an increasing number of images, such as a photo, a video, and an e-card. By using image-editing software, the terminal device may further add some annotation information, such as a place for taking the photo or shooting the video, a name of a character in the photo or video, or greeting words on the e-card, to an image.

However, some pixels of the image are shielded because the terminal device adds the annotation information to the image.

### SUMMARY

The present invention provides an image processing method and a terminal device, to resolve a problem in the prior art that some pixels of an image are shielded because a terminal device adds annotation information to the image.

According to one aspect, an image processing method is provided and includes:
displaying an image in a terminal;
receiving an instruction for viewing description information of the image, where the description information of the image includes time, a place, or remark information of the image; and
presenting the description information of the image outside a display area of the image.

According to another aspect, a terminal device is provided and includes:
a displaying module, configured to display an image in the terminal;
a receiving module, configured to receive an instruction for viewing description information of the image, where the description information of the image includes time, a place, or remark information of the image; and
a presenting module, configured to present the description information of the image outside a display area of the image.

It may be known from the foregoing technical solutions that, in embodiments of the present invention, an image in a terminal is displayed in a display area on a screen of the terminal; and after an instruction for viewing description information of the image is received, the description information of the image is presented outside the display area of the image. Therefore, it avoids a problem in the prior art that some pixels of an image are shielded because a terminal device adds annotation information to the image, thereby effectively increasing a visual effect of the image.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flowchart of an image processing method according to an embodiment of the present invention;
FIG. 2 is a schematic flowchart of an image processing method according to another embodiment of the present invention;
FIG. 2A is a schematic flowchart of implementation manner 1 in step 204 shown in FIG. 2;
FIG. 2B is a schematic flowchart of implementation manner 2 in step 204 shown in FIG. 2;
FIG. 3 is a schematic structural diagram of a terminal device according to an embodiment of the present invention;
FIG. 4 is a schematic structural diagram of a terminal device according to another embodiment of the present invention;
FIG. 4A is a schematic structural diagram of a presenting module 33 shown in FIG. 2; and
FIG. 4B is another schematic structural diagram of a presenting module 33 shown in FIG. 2.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be noted that a terminal device in the embodiments of the present invention includes, but is not limited to, a mobile phone, a personal digital assistant (personal digital assistant, PDA for short), a wireless handheld device, a wireless netbook, a portable computer, an MP3 player, or an MP4 player.

### Embodiment 1

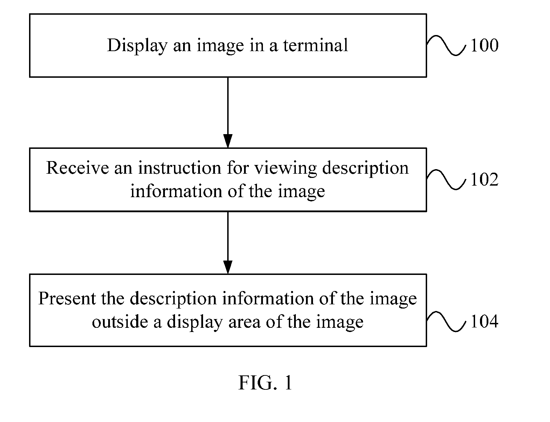

FIG. 1 is a schematic flowchart of an image processing method according to an embodiment of the present invention. As shown in FIG. 1, the image processing method in this embodiment may include:
100. Display an image in a terminal.

The image in the terminal may include, but is not limited to, a photo or a video, and this embodiment of the present invention sets no limit thereto.

102. Receive an instruction for viewing description information of the image.

The description information of the image includes time, a place, or remark information of the image, which may be specifically determined according to an actual need. This embodiment of the present invention sets no limit thereto.

It should be noted that the time of the image may be system time of the terminal when the image is taken, or may be time entered by a user manually. The place of the image may be geographical location information of the terminal when the image is taken. Specifically, the geographical location information may be obtained by using a network map, a satellite positioning system, or the like, or may be a place manually entered by the user. The remark information may be content manually entered by the user, which may be specifically an explanation of content of the image, such as an introduction to a character on the image, an introduction to scenery, a mood of the user when the image is taken, or some greeting words. That is, all information that the user can think of may be saved in the description information of the image as the remark information.

104. Present the description information of the image outside a display area of the image.

In this embodiment of the present invention, an image in a terminal is displayed in a display area on a screen of the terminal; and after an instruction for viewing description information of the image is received, the description information of the image is presented outside the display area of the image. Therefore, it avoids a problem in the prior art that some pixels of an image are shielded because a terminal device adds annotation information to the image, thereby effectively increasing a visual effect of the image.

### Embodiment 2

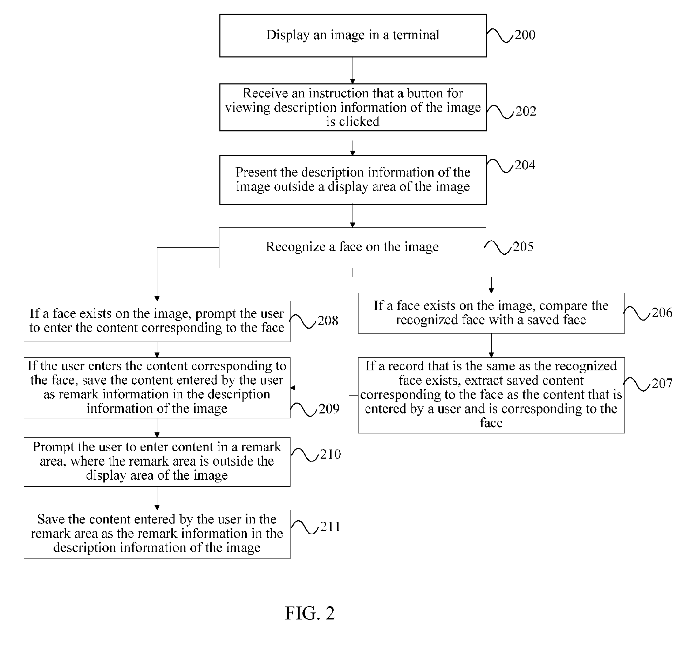

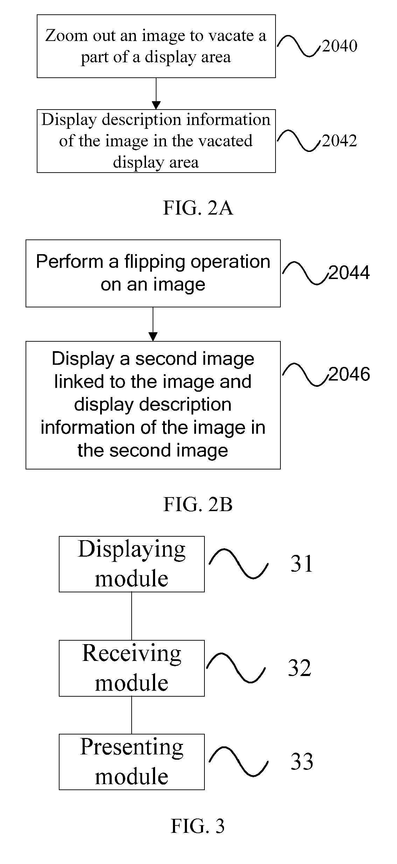

FIG. 2 is a schematic flowchart of an image processing method according to an embodiment of the present invention. As shown in FIG. 2, the image processing method in this embodiment may include:
200. Display an image in a terminal.

The image in the terminal may include, but is not limited to, a photo or a video, and this embodiment of the present invention sets no limit thereto.

202. Receive an instruction that a button for viewing description information of the image is clicked.

The description information of the image includes time, a place, or remark information of the image, which may be specifically determined according to an actual need. This embodiment of the present invention sets no limit thereto.

It should be noted that the time of the image may be system time of the terminal when the image is taken, or may be time entered by a user manually. The place of the image may be geographical location information of the terminal when the image is taken. Specifically, the geographical location information may be obtained by using a network map, a satellite positioning system, or the like, or may be a place manually entered by the user. The remark information may be content manually entered by the user, which may be specifically an explanation of content of the image, such as an introduction to a character on the image, an introduction to scenery, a mood of the user when the image is taken, or some greeting words. That is, all information that the user can think of may be saved in the description information of the image as the remark information.

In addition, it should be noted that the foregoing button may be implemented by software or hardware. A virtual button may be added, a hardware button may be newly added, a function of viewing the description information of the image may be added to an existing button, or a certain touch gesture may be newly defined to represent viewing of the description information of the image.

204. Present the description information of the image outside a display area of the image. There are a plurality of specific implementation manners. The following are some examples.

Manner 1 is shown in FIG. 2A.

2040. Zoom out the image to vacate a part of the display area.

2042. Display the description information of the image in the vacated display area.

A specific zoom-out scale of the image may be determined according to an actual need. For example, if the terminal device is a mobile phone with a smaller screen, only one-word width may be vacated in an upper or lower part of the screen, and the description information of the image is displayed in one line. If content of the description information is large in size, the description information of the image may be displayed in a scrolling manner. If the terminal device is a PDA with a larger screen, the zoom-out scale of the image may be properly increased to vacate a larger display area. The specific zoom-out scale of the image may be adjusted adaptively according to a size of the screen, and the embodiment of the present invention sets no specific limit thereto.

In this implementation manner, the image and the description information of the image may be displayed at the same time, and the user may see the description information of the image in a case in which an original image is not shielded, thereby effectively increasing user experience when the user uses the terminal.

Manner 2 is shown in FIG. 2B.

2044. Perform a flipping operation on the image.

2046. Display a second image linked to the image and display the description information of the image in the second image.

It should be noted that there is a correspondence between the image and the second image. The correspondence may be recorded in a manner of adding an identifier to the two images. The other image linked to the image is displayed when the identifier on the image is clicked. The correspondence may also be saved; when the second image linked to the image is to be displayed, the correspondence is firstly called, then the second image corresponding to the image is found, and then the second image is displayed.

In manner 2, the foregoing terminal device may specifically generate the second image in a specified pixel size according to a preset specified pixel size, and may further specifically generate, according to a pixel size of the image, the second image in the same pixel size as the image.

It may be understood that an effect of flipping the displayed image in the terminal device is similar to an effect of an action of flipping a plane, so as to make the user visually take the second image for the back of the image.

In manner 2, the user may view the description information of the image in a manner of flipping the image in a case in which the original image is not shielded. In addition, the effect of flipping the displayed image in the terminal device is similar to the effect of the action of flipping the plane, so as to make the user visually take the second image for the back of the image, thereby effectively increasing the user experience when the user uses the terminal device.

### Manner 3

The description information of the image is played in an audio manner.

In manner 3, the description information of the image is played in the audio manner. The user may listen to the description information of the image in a case in which the image is not shielded, thereby effectively increasing the user experience when the user uses the terminal device.

Optionally, the method may further include the following steps:
205. Recognize a face on the image.

Specifically, a face recognition technology in the prior art may be adopted, and details are not described herein again.

208. If a face exists on the image, prompt the user to enter content corresponding to the face.

If a face exists on the foregoing image, it indicates that the forgoing image is an image related to a character. The user may need to record such information as a name, personality, title, and hobby of the character on the image; therefore, the terminal prompts the user to enter the content corresponding to the face. A prompting manner may be that: an empty input box is provided, and indicative text may be written in the input box, for example, please enter a name here; it may also be a prompt for the user to enter information by entering a recording.

209. If the user enters the content corresponding to the face, save the content entered by the user as the remark information in the description information of the image.

It should be noted that a corresponding saving operation needs to be performed according to different entered content; for example, if the entered content is text, it is saved in a text manner; if the entered content is an audio, it is saved in a recording and saving manner.

Further, a correspondence between the face and the entered content on the image needs to be saved, or the entered content is simply saved according to a sequence of faces on the image.

Optionally, after step 205, the method may further include:
206. If a face exists on the image, compare the recognized face with a saved face.

It should be noted that the saved face in the terminal may be a profile picture saved in a contact list, and may also be information about a friend's profile picture saved in another application.

207. If a record that is the same as the recognized face exists, extract saved content corresponding to the face as the content that is entered by the user and is corresponding to the face, and then perform step 209; if no record that is the same as the recognized face exists, perform step 208 (not shown in the figure).

It should be noted that when a record that is the same as the recognized face exists, saved information corresponding to the character is extracted; for example, the name is used as the content that is entered by the user and is corresponding to the face. Certainly, the user may also modify or re-enter the content corresponding to the face. In this way, an existing resource may be used to fill the content corresponding to the face, and an action of manual input by the user is omitted.

It should be noted that when no face is recognized in the foregoing image, steps 206 to 209 may be skipped; the user is unaware of existence of the steps of face recognition.

In addition, it should be noted that, steps 205 to 209 are steps set for face recognition; the recognition is performed only once and does not need to be repeated. No more recognition is required in a subsequent process of viewing the description information of the image.

Annotation information may be added to the face on the image by adding steps 205 to 209. Therefore, the user can see the annotation information corresponding to the face when viewing the image, thereby obtaining a prompt.

Optionally, the method further includes:
210. Prompt the user to enter content in a remark area, where the remark area is outside the display area of the image.

It should be noted that, a prompting manner may be that: an empty input box is provided, and indicative text may be written in the input box, for example, please enter content here; it may also be a prompt for the user to enter information by entering a recording. In addition, if the user has entered the remark information, the content entered by the user is displayed in the remark area.

211. Save the content entered by the user in the remark area as the remark information in the description information of the image.

It should be noted that a corresponding saving operation needs to be performed according to different entered content; for example, if the entered content is text, it is saved in a text manner; if the entered content is an audio, it is saved in a recording and saving manner.

By performing steps 210 to 211, the user may enter desirable content in the image so that the user may see the description information of the image when viewing the image. For example, the user has a tour in a place and has taken photos of beautiful scenery. The user wants to give regards to a friend by using a photo of the beautiful scenery. By using the method described in this embodiment of the present invention, the user may add greeting words to the remark area of the photo and send the photo to the friend. The friend can receive the regards from afar while appreciating the beautiful scenery.

It should be noted that steps 205 to 209 and steps 210 to 211 are all optional steps; steps 205 to 209 and steps 210 to 211 are not performed in an order of sequence, and may also be performed at the same time. They may specifically be set according to an actual need, and this embodiment of the present invention sets no limit thereto.

Further, it should be noted that, a status of displaying the description information of the image may be exited by re-clicking the button, or a status of displaying a next image is entered after a touch operation of turning a page is received.

It should be noted that, for ease of description, each foregoing method embodiment is described as a combination of a series of actions; however, persons skilled in the art should know that, the present invention is not limited by the described action sequence, because some steps may be performed in another sequence or simultaneously according to the present invention. In addition, persons skilled in the art should also know that the embodiments described in the specification are exemplary embodiments, and the involved actions and modules are not necessarily required by the present invention

In the foregoing embodiments, the description of each embodiment has different emphasis; for content that is not detailed in an embodiment, refer to related description in another embodiment.

### Embodiment 3

FIG. 3 is a schematic structural diagram of a terminal device according to another embodiment of the present invention. As shown in FIG. 3, the terminal device of this embodiment may include a displaying module 31, a receiving module 32, and a presenting module 33. The displaying module 31 is configured to display an image in a terminal; the receiving module 32 is configured to receive an instruction for viewing description information of the image, where the description information of the image includes time, a place, or remark information of the image; and the presenting module 33 is configured to present the description information of the image outside a display area of the image.

The description information of the image includes the time, the place, or the remark information of the image, which may be specifically determined according to an actual need. This embodiment of the present invention sets no limit thereto.

It should be noted that the time of the image may be system time of the terminal when the image is taken, or may be time entered by a user manually. The place of the image may be geographical location information of the terminal when the image is taken. Specifically, the geographical location information may be obtained by using a network map, a satellite positioning system, or the like, or may be a place manually entered by the user. The remark information may be content manually entered by the user, which may be specifically an explanation of content of the image, such as an introduction to a character on the image, an introduction to scenery, a mood of the user when the image is taken, or some greeting words. That is, all information that the user can think of may be saved in the description information of the image as the remark information. The image may include, but not limited to, a picture or a video, and this embodiment of the present invention sets no limit thereto.

A function of the terminal device in the embodiments corresponding to the foregoing FIG. 1 and FIG. 2 may be implemented by the terminal device according to this embodiment.

In this embodiment of the present invention, an image in a terminal is displayed in a display area on a screen of the terminal; and after an instruction for viewing description information of the image is received, the description information of the image is presented outside the display area of the image. Therefore, it avoids a problem in the prior art that some pixels of an image are shielded because a terminal device adds annotation information to the image, thereby effectively increasing a visual effect of the image.

### Embodiment 4

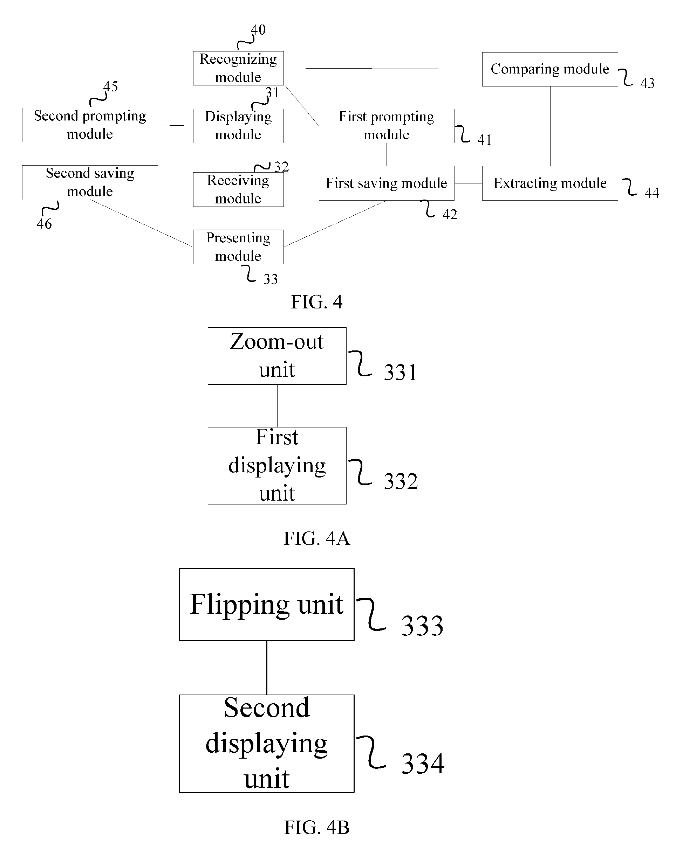

FIG. 4 is a schematic structural diagram of a terminal device according to another embodiment of the present invention. As shown in FIG. 4,
the terminal device in this embodiment may include a displaying module 31, a receiving module 32, and a presenting module 33. The displaying module 31 is configured to display an image in a terminal; the receiving module 32 is configured to receive an instruction for viewing description information of the image, where the description information of the image includes time, a place, or remark information of the image; and the presenting module 33 is configured to present the description information of the image outside a display area of the image.

The description information of the image includes the time, the place, or the remark information of the image, which may be specifically determined according to an actual need. This embodiment of the present invention sets no limit thereto.

It should be noted that the time of the image may be system time of the terminal when the image is taken, or may be time entered by a user manually. The place of the image may be geographical location information of the terminal when the image is taken. Specifically, the geographical location information may be obtained by using a network map, a satellite positioning system, or the like, or may be a place manually entered by the user. The remark information may be content manually entered by the user, which may be specifically an explanation of content of the image, such as an introduction to a character on the image, an introduction to scenery, a mood of the user when the image is taken, or some greeting words. That is, all information that the user can think of may be saved in the description information of the image as the remark information. The image may include, but not limited to, a picture or a video, and this embodiment of the present invention sets no limit thereto.

In this embodiment of the present invention, the receiving module is specifically configured to receive an instruction that a button for viewing the description information of the image is clicked.

There are a plurality of specific implementation manners in which the description information of the image is presented outside the display area of the image. A specific function of the presenting module varies with the implementation manner.

As shown in FIG. 4A, in manner 1, the presenting module 33 may include: a zoom-out unit 331, configured to zoom out the image to vacate a part of the display area; and a first displaying unit 332, configured to display the description information of the image in the vacated display area.

As shown in FIG. 4B, in manner 2, the presenting module 33 may include: a flipping unit 333, configured to perform a flipping operation on the image; and a second displaying unit 334, configured to display a second image linked to the image and display the description information of the image in the second image.

It should be noted that there is a correspondence between the image and the second image. The correspondence may be recorded in a manner of adding an identifier to the two images. The other image linked to the image is displayed when the identifier on the image is clicked. The correspondence may also be saved; when the second image linked to the image is to be displayed, the correspondence is firstly called, then the second image corresponding to the image is found, and then the second image is displayed.

In manner 2, the foregoing terminal device may specifically generate, according to a preset specified pixel size, the second image that is in a specified pixel size and is corresponding to the image; and may further specifically generate, according to the pixel size of the image, the second image in the same pixel size as the image.

In manner 3, the presenting module 33 is specifically configured to play the description information of the image in an audio manner.

Optionally, the terminal device may further include the following modules:
a recognizing module 40, configured to recognize a face on the image, where a face recognition technology in the prior art may be specifically adopted, and details are not described herein again;
a first prompting module 41, configured to: if a face exists on the image, prompt a user to enter content corresponding to the face; and
a first saving module 42, configured to: if the user enters the content corresponding to the face, save the content entered by the user as the remark information in the description information of the image.

That is, the terminal may complete manual input and saving of the content corresponding to the face by including the recognizing module 40, the first prompting module 41, and the first saving module 42.

Optionally, the terminal device may further include the following modules:
a recognizing module 40, configured to recognize a face on the image, where a face recognition technology in the prior art may be specifically adopted, and details are not described herein again;
a comparing module 43, configured to: if a face exists on the image, compare the recognized face with a saved face;
an extracting module 44, configured to: if a record that is the same as the recognized face exists, extract saved content corresponding to the face as the content that is entered by the user and is corresponding to the face; and
a first saving module 42, configured to: if the user enters the content corresponding to the face, save the content entered by the user as the remark information in the description information of the image.

That is, the terminal completes automatic input and saving of the content corresponding to the face by including the recognizing module 40, the comparing module 43, the extracting module 44, and the first saving module 42. If a comparison result of the comparing module 43 is that no record that is the same as the recognized face exists, the terminal may further include the first prompting module 41; therefore, when no record that is the same as the recognized face exists, the user may be prompted in time to enter the content corresponding to the face, and then to complete manual input and saving of the content corresponding to the face.

Optionally, the terminal device may further include the following modules:
a second prompting module 45, configured to prompt the user to enter content in a remark area, where the remark area is outside the display area of the image; and a second saving module 46, configured to save the content entered by the user in the remark area as the remark information in the description information of the image.

In this embodiment of the present invention, an image in a terminal is displayed in a display area on a screen of the terminal; and after an instruction for viewing description information of the image is received, the description information of the image is presented outside the display area of the image. Therefore, it avoids a problem in the prior art that some pixels of an image are shielded because a terminal device adds annotation information to the image, thereby effectively increasing a visual effect of the image.

It may be clearly understood by persons skilled in the art that, for convenience and brevity, for a specific working process of the foregoing terminal device, refer to a corresponding process in the foregoing method embodiments, and details are not described herein again.

In the several embodiments provided in the present application, it should be understood that the disclosed method and terminal device may be implemented in other manners. For example, the foregoing described apparatus embodiment is merely exemplary; for example, the division of the module and the unit is merely logical function division and may be divided in another manner in actual implementation; for example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that: the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. An image processing method, comprising:
displaying an image in a terminal;
receiving an instruction for viewing description information of the image, wherein the description information of the image comprises time, a place, or remark information of the image; and
presenting the description information of the image outside a display area of the image.

2. The method according to claim 1, wherein the receiving an instruction for viewing description information of the image comprises:
receiving an instruction that a button for viewing the description information of the image is clicked.

3. The method according to claim 1 or 2, wherein the presenting the description information of the image outside a display area of the image specifically comprises:
zooming out the image to vacate a part of the display area; and
displaying the description information of the image in the vacated display area.

4. The method according to claim 1 or 2, wherein the presenting the description information of the image outside a display area of the image comprises:
performing a flipping operation on the image; and
displaying a second image linked to the image and displaying the description information of the image in the second image.

5. The method according to claim 1 or 2, wherein the presenting the description information of the image outside a display area of the image comprises:
playing the description information of the image in an audio manner.

6. The method according to any one of claims 1 to 5, further comprising:
recognizing a face on the image;
if a face exists on the image, prompting a user to enter content corresponding to the face; and
if the user enters the content corresponding to the face, saving the content entered by the user as the remark information in the description information of the image.

7. The method according to any one of claims 1 to 5, further comprising:
recognizing a face on the image;
if a face exists on the image, comparing the recognized face with a saved face;
if a record that is the same as the recognized face exists, extracting saved content corresponding to the face as the content that is entered by the user and is corresponding to the face; and
if the user enters the content corresponding to the face, saving the content entered by the user as the remark information in the description information of the image.

8. The method according to any one of claims 1 to 7, further comprising:
prompting the user to enter content in a remark area, wherein the remark area is outside the display area of the image; and
saving the content entered by the user in the remark area as the remark information in the description information of the image.

9. A terminal device, comprising:
a displaying module, configured to display an image in the terminal;
a receiving module, configured to receive an instruction for viewing description information of the image, wherein the description information of the image comprises time, a place, or remark information of the image; and
a presenting module, configured to present the description information of the image outside a display area of the image.

10. The terminal device according to claim 9, wherein the receiving module is specifically configured to:
receive an instruction that a button for viewing the description information of the image is clicked.

11. The terminal device according to claim 9 or 10, wherein the presenting module comprises:
a zoom-out unit, configured to zoom out the image to vacate a part of the display area; and
a first displaying unit, configured to display the description information of the image in the vacated display area.

12. The terminal device according to claim 9 or 10, wherein the presenting module comprises:
a flipping unit, configured to perform a flipping operation on the image; and
a second displaying unit, configured to display a second image linked to the image and display the description information of the image in the second image.

13. The terminal device according to claim 9 or 10, wherein the presenting module is specifically configured to play the description information of the image in an audio manner.

14. The terminal device according to any one of claims 9 to 13, further comprising:
a recognizing module, configured to recognize a face on the image;
a first prompting module, configured to: if a face exists on the image, prompt a user to enter content corresponding to the face; and
a first saving module, configured to: if the user enters the content corresponding to the face, save the content entered by the user as the remark information in the description information of the image.

15. The terminal device according to any one of claims 9 to 13, further comprising:
a recognizing module, configured to recognize a face on the image;
a comparing module, configured to: if a face exists on the image, compare the recognized face with a saved face;
an extracting module, configured to: if a record that is the same as the recognized face exists, extract saved content corresponding to the face as the content that is entered by the user and is corresponding to the face; and
a first saving module, configured to: if the user enters the content corresponding to the face, save the content entered by the user as the remark information in the description information of the image.

16. The terminal device according to any one of claims 9 to 15, further comprising:
a second prompting module, configured to prompt the user to enter content in a remark area, wherein the remark area is outside the display area of the image; and
a second saving module, configured to save the content entered by the user in the remark area as the remark information in the description information of the image.
